# EUROPEAN PATENT APPLICATION

(11) **EP 2 500 327 A1**
(43) Date of publication of application: **19.09.2012**
(21) Application number: 12001574.8
(22) Date of filing: 08.03.2012
(51) Int. Cl.: C02F 11/12, B01D 21/00, B01D 21/24

(54) **Apparatus or device for removing mud in suspension from dirty waters or waste waters and plant equipped with said device for collecting and treating dirty waters or waste waters**

(30) Priority: 14.03.2011 IT VI20110050
(71) Applicant: S.T. MACCHINE S.P.A., 36030 Monte di Malo (VI) (IT)
(72) Inventor: Danieli, Daniele, 36034 Malo (VI) (IT)
(74) Representative: Ziliotto, Tiziano

(57) **Abstract**

Apparatus or device for collecting mud and/or solid components from dirty waters such as waste waters produced by civil and/or industrial premises, said apparatus being provided with collecting vanes suited to be rotated around a common main rotation axis so as to collect said mud or solid elements during their rotation around said common main rotation axis and to discharge said mud due to gravity towards a first end portion of the apparatus, in which the mud collected by the vanes of a portion of the device are introduced in a hollow body and from here conveyed towards said first end portion of the apparatus or device. The present invention also concerns a plant for the treatment of dirty and/or waste waters.

## Description

### TECHNICAL FIELD OF APPLICATION OF THE PRESENT INVENTION

The present invention concerns the technical field involving the treatment of dirty waters and/or waste waters produced by civil and/or industrial premises. In particular, the present invention concerns an apparatus for collecting and treating dirty waters and/or waste waters produced by civil and/or industrial premises. In greater detail, the present invention concerns a device called "auger" suited to be used in a system called "floater" for the collection and clarification of dirty waters.

### DESCRIPTION OF THE STATE OF THE ART

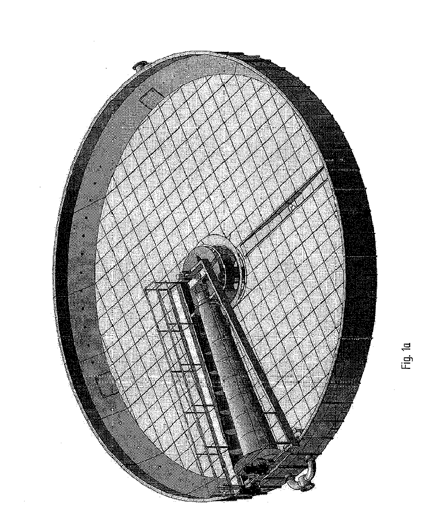

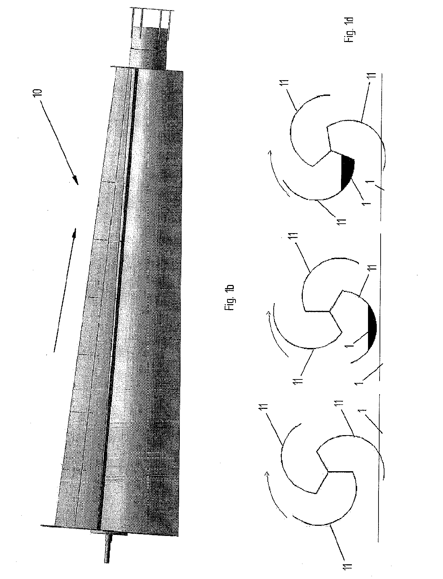

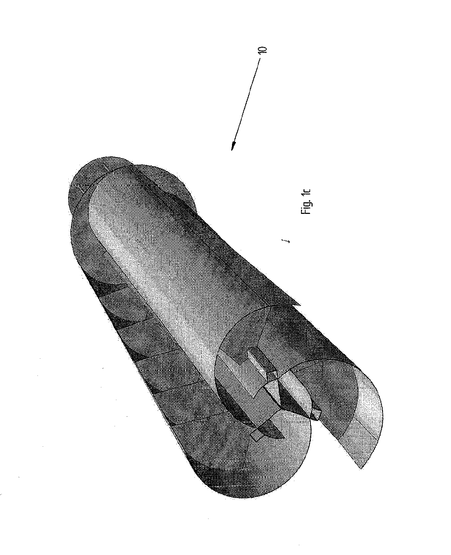

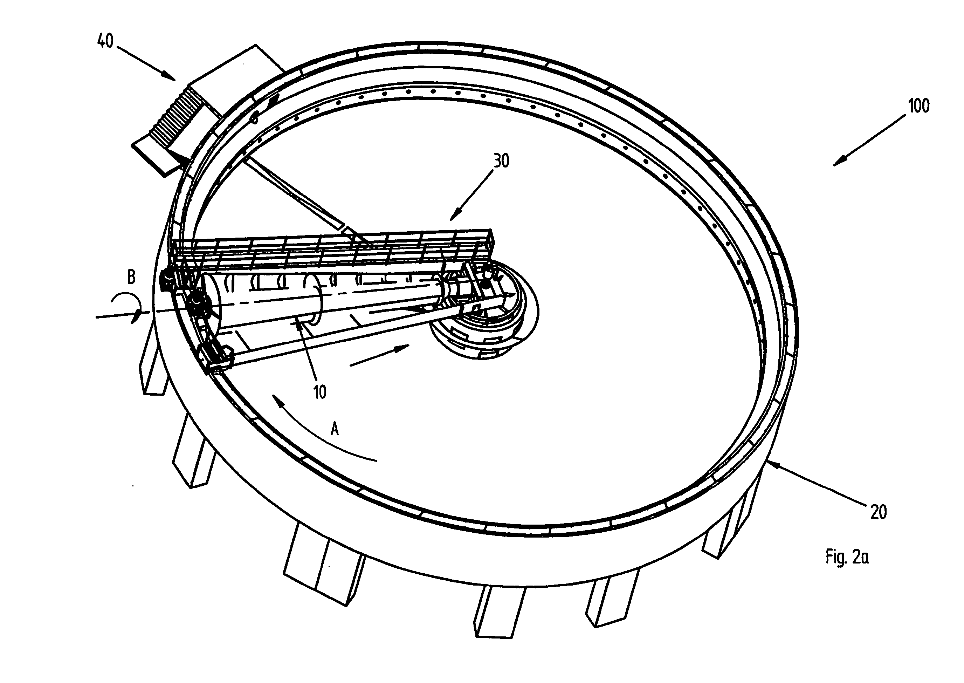

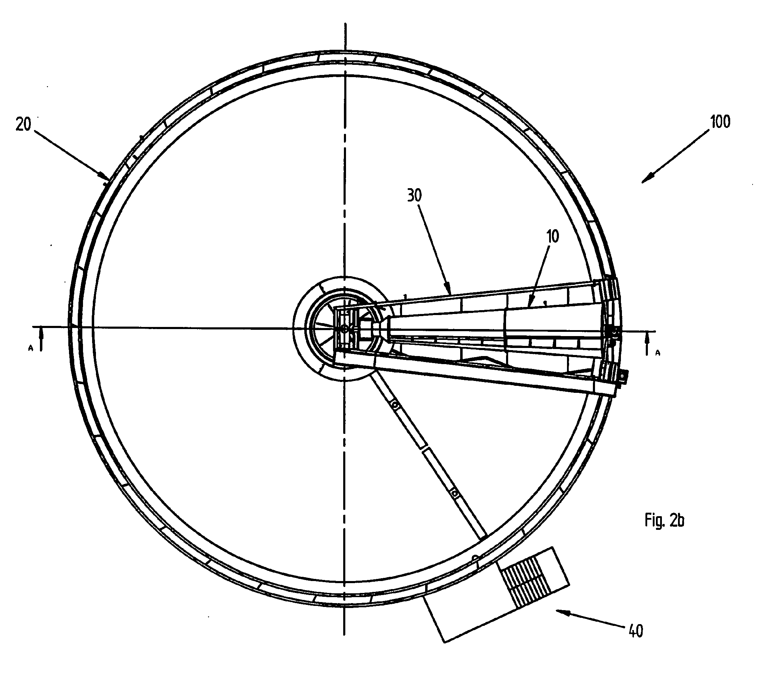

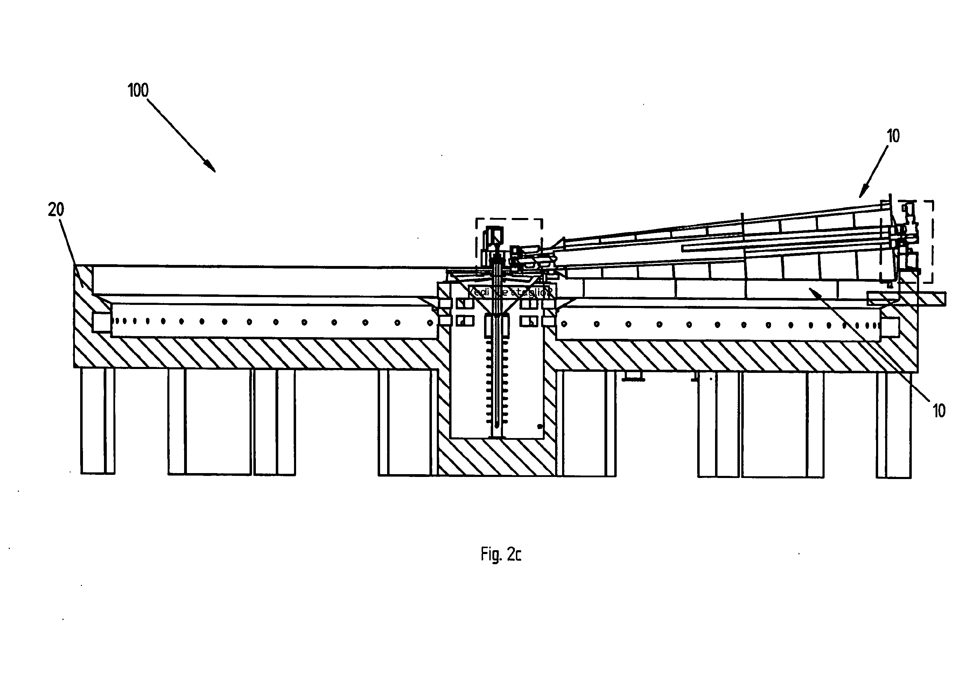

In the field of the treatment and/or clarification of dirty waters and/or waste waters, systems of the type schematically shown in Figures from 1a to 1d are known. The known systems of this type substantially comprise a main tank for the collection of dirty waters (circular with a substantially vertical side wall), in which the dirty waters to be treated are conveyed; a chemical-physical process is employed in the tank to obtain the separation of the dirt present in the waters, wherein said dirt moves upwards and forms a surface layer of mud having a given thickness. The clean water (containing no dirt or acceptable residues of dirt) is let out from a suitable mouth located in the lower part of the tank. On the other hand, the suspended mud is collected and removed by means of a device called auger 10 suited to be rotated around a main rotation axis substantially coinciding with the longitudinal axis of symmetry of the auger. The auger is provided with collecting vanes 11 and is arranged in such a way as to extend between the centre of the tank and the cylindrical wall of the same, with its longitudinal axis of symmetry (and of rotation) slightly inclined downwards towards the centre of the tank; the vanes 11 of the auger 10 extend radially from the rotation axis and have a partially circular development, such as to substantially give the auger the shape of a truncated cone. This means that the rounded ends of the vanes lie on a truncated cone-shaped surface whose radius is the minimum near the centre of the tank and increases moving away from the centre of the tank and getting near the cylindrical side wall of the tank itself. During the rotation of the auger around its longitudinal axis of symmetry, the vanes are immersed and they alternately emerge from the mud 1 suspended in the tank, as shown in Figure 1d, in such a way as to collect said mud. The inclination of the auger (of its rotation axis or longitudinal axis of symmetry) is selected in such a way that the vanes 11, during their immersion stage, are immersed in the suspended mud (and perhaps even in the water thereunder) to a substantially constant depth along the route between the centre of the tank and the cylindrical wall of the same. Therefore, since the auger has substantially the shape of a truncated cone (the size of the vanes increasing in proximity to the cylindrical wall of the tank and decreasing towards the centre of the tank), the rotation axis, as previously mentioned, will be slightly inclined downwards towards the centre of the tank. Considering a cross section of the auger, the peripheral part of each vane develops in the shape of a spiral that towards the centre is shaped in such a way as to defme a drain channel that will be slightly inclined downwards, too, towards the centre of the tank. Thanks to this slight inclination of the discharge channels defmed by the collecting vanes 11, the collected mud will slide along said channels due to the effect of the weight force, flowing towards the centre of the tank, from where they will be unloaded into a tank with reduced diameter (not illustrated in the figures) that is substantially concentric with the main tank, from which they will be removed to be disposed of. The auger 10, furthermore, can be rotated around a rotation axis that substantially coincides with the longitudinal axis of symmetry of the tank (and thus substantially vertical) so that the mud will be collected on the whole surface of the tank, thanks to the two rotations of the auger indicated by the arrows A and B in Figure 2a, meaning a rotation around a substantially vertical axis and a rotation around an axis that coincides with the axis of symmetry of the auger 10 and is slightly inclined downwards towards the centre of the tank. The floater device will also be provided with service accessory elements, like for example an inspection bridge suited to allow service personnel to pass between the edge of the tank and the centre of the same, and thus to allow inspection or maintenance operations to be carried out whenever necessary.

The known art also includes systems of the type in which the mud is not conveyed towards the centre of the tank but towards the external wall of the same; also these systems, however, use an auger or a floater device of the type described above and therefore the same process for collecting and removing the mud.

The systems known in the state of the art, in particular the auger or floater devices of the state of the art pose several drawbacks and/or problems.

A first problem concerns the fact that in the known solutions each vane of the auger is substantially as long as the radius of the collecting tank. As described above, each vane thus collects the mud that then, owing to the inclination of the vane itself, flows towards the centre of the tank (or towards the edge of the same, depending on the type of plant), from where it is then definitively removed. Due to the inclination of the vanes (rotation axis of the same) and for the purpose of obtaining a substantially uniform and constant immersion depth of the same along the route between the centre of the tank and its side wall, the vanes are shaped in such a way as to give the auger a truncated cone shape or, in other words, in such a way that the free and rounded ends of the vanes lie on common surface substantially in the shape of a truncated cone. This means that, as already mentioned, the vanes will be less developed in proximity to one end of the auger and progressively more developed towards the opposite end of the auger, or, in other words, that the distance between the free edge of each vane (opposite the common rotation axis) will not be constant but will be shorter near one of the two ends of the auger and longer near the second end of the auger that is opposite said first end. Therefore, since the inclination (rotation axis) of the auger is an almost constant datum, as the dimensions of the collecting tank (essentially the radius of the collecting tank) increase, the total length of the auger increases, too, and thus the distance between the free edge of each vane and the same rotation axis in proximity to one of the ends of the auger. For the sake of clarity, here below the distance between the free edge of each vane of the auger and the rotation axis of the auger will also be defined as the vane radius. It is thus possible to appreciate that, in the case of augers of considerable length (equal to or longer than 10 m) the radius of the vanes in proximity to one end of the auger reaches considerable values, such that the auger reaches considerable overall dimensions and a considerable weight, which will make transport and movement of the auger extremely difficult, involving an often unsustainable increase in the relative costs.

A further problem, typical of the solutions known in the state of the art, regards the disposal of the mud and the conveyance of the same towards an end of the auger (towards the centre of the tank or towards the edge of the same, depending on the type of plant). In fact, the mud collected in proximity to the end of the auger opposite the end towards which the mud is conveyed must cover a distance substantially corresponding to the overall length of the auger and thus to the radius of the water collecting tank. Thus, supposing that the rotation speed is (as in the more frequent cases) approximately 3 rpm, and considering that the mud collected by a vane must reach the end of the auger before the same vane is immersed in the mud again (to avoid the so-called "rejection" of the mud, which would mean a reduction in the efficiency of the auger and thus of the whole plant), it will be possible to appreciate that the mud has a time interval corresponding to 60 sec/3rpm - 5 sec (idle time) = 15 sec at its disposal to slide from one end of the auger to the other and thus to reach the conveying end of the auger. Thus, considering a total length of the auger of approximately 3 m, in order to allow the mud to be conveyed without being "rejected", its minimum sliding speed along the auger (along one vane of the same) must be equal to 3 m/15 sec, and thus equal to 0.2 m/sec. Considering, instead, a total length of the auger of approximately 12 m, and the same inclination angle of the auger of 3 m, the minimum sliding speed of the mud should be equal to 12/15 = 0.8 m/sec, and thus it would be four times the speed calculated for the previous case. This however is a criticality factor, in fact it is the weight force that causes and allows the sliding movement of the mud, and thus, the higher is the sliding speed required by the operating conditions of the plant, the higher is the risk of rejection. Each fluid or mud, according to its chemical-physical characteristics and to the inclination of the auger axis, has a maximum sliding speed that actually limits the rotation speed of the auger, otherwise a rejection phenomenon would occur. Limiting the rotation speed of the auger means limiting the mass of mud transported per unit of time and thus limiting the efficiency and productivity of the plant as a whole. In these conditions, however, the plant may have to face a critical situation, in fact it may happen that the mud cannot reach the minimum sliding speed of 0.8 m/sec, so that it is not unloaded before the vane that collected it is re-immersed in the mud, and consequently it is impossible to prevent rejection of the same. In this case it is thus necessary to reduce the rotation speed of the auger around its longitudinal axis of symmetry, which however involves a reduction in the quantity of mud transported per unit of time, and thus a reduction in the efficiency and productivity of the plant as a whole. Given an auger having a certain length and a certain maximum diameter, with a certain inclination and a certain type of mud, the efficiency of the auger is the maximum quantity of mud removed per unit of time without the occurrence of a rejection phenomenon.

It is thus an object of the present invention to overcome the drawbacks mentioned above and observed in the solutions known in the state of the art. In particular, the objects and purposes of the present invention can be summed up as follows.

One of the objects of the invention is to provide a solution concerning an auger for systems for the treatment and/or clarification of dirty waters and/or waste waters produced by civil and/or industrial premises that allows the efficiency of the augers known in the state of the art to be increased. In further detail, the solution according to the present invention should make it possible to dispose of larger quantities of mud while maintaining the same dimensions as in the solutions known in the art. This means that when the device according to the invention has a size and overall dimensions that can be compared to those of the devices known in the state of the art, the device according to the invention should allow a larger quantity of mud to be disposed of per unit of time. In other words, the device according to the invention will have reasonable and limited dimensions, and this will not affect its ability to remove and transport mud. This object is of primary importance, especially in the case of devices whose overall length is equal to or exceeds 10 m, with which the solutions known in the art reach a size and overall dimensions that make them difficult to handle and transport, involving often unsustainable costs. Finally, the device according to the present invention must be easy to construct and suited to be installed with simplified procedures.

The objects or goals mentioned and described above are achieved by means of an apparatus or device according to the embodiment claimed in the main claim 1. Further advantages are also offered by the embodiments of the present invention claimed in the dependent claims.

### DESCRIPTION OF THE PRESENT INVENTION

The present invention can be advantageously applied in particular for the construction of systems for the treatment and/or clarification of dirty waters and/or waste waters produced by civil and/or industrial premises. In particular, the present invention can be advantageously applied especially for constructing augers suited to be used in systems of the type mentioned above. For this reason, here below examples are described in which the present invention is used for making augers for systems for the clarification and/or treatment of dirty waters and/or waste waters. It should be noted, however, that the possible applications of the present invention are not limited to the construction of augers for dirty water treatment systems. On the contrary, the present invention is advantageously applied in particular in all those cases in which it is necessary to provide an auger for collecting and conveying solid and/or semi-solid and/or semi-fluid materials, like for example gravel and/or sand, semi-solid cement or even loose cereals or the like.

The present invention is based on the general concept that the disadvantages or drawbacks that are typical of the solutions known in the art (in particular of the augers of the known type) can be overcome or at least reduced to a minimum by providing an auger comprising collecting vanes that, during its rotation around its own axis (longitudinal axis of symmetry), collects mud or materials or similar elements and unloads them by gravity towards a first one of its ends. Said auger will also comprise a first portion adjacent to said first discharging end portion in which the above mentioned vanes extend from a tubular hollow body, and a second portion adjacent to said first portion and opposite said first discharge end portion, in which the mud collected by the vanes of said second portion are conveyed into said hollow tubular body of said first portion and are discharged inside said hollow tubular body towards said end.

In the case of a device of this type, in fact, the mud collected by the vanes of the portion opposite the discharging end portion will be discharged in the hollow body of the first portion (adjacent to the discharging end portion) and thus it will no more have to cover, in the time required for a revolution of the auger, a section whose length corresponds to the whole length of the device, but a section whose length corresponds to the length of the portion of the device opposite the discharging end portion; the same mud, in the first portion, will slide inside the hollow body of the first portion. For the mud collected by the vanes of the second portion the risk of rejection (of being conveyed back into the tank) will thus be reduced. Concerning the mud collected by the vanes of the first portion of the device, the same will slide along the channels defined by the combination of the vanes with the hollow body, and thus outside it.

Presuming, therefore, to construct a device comprising a first and a second portion, with the same rotation speed of the device and the same inclination of the auger, the mud collected by the vanes of the second portion of the device must cover a distance that is shorter than the distance they would have to cover in a device of the known type, so that it will be possible to tolerate a slower mud transport speed. With reference to the example described above, if the device were, for example, 12 m long, for the purpose of mud transportation it could be compared to a device whose length is 6 + 6 m (or even 5 + 7, or 4 + 8 etc); in this way, it will be sufficient to guarantee a mud transportation speed of 6 m/15 sec = 0.4 m/sec in order to maintain a rotation speed of 3 rpm with a totally efficient plant and no rejection. If a lower transportation speed were needed, the device according to the invention may be less inclined and thus, given the same length, feature a shorter distance (vane radius) than a traditional device between the free edge of each vane and the common rotation axis, with considerable advantages in terms of ease of transport, handling, assembly and installation of the device itself. A further consideration on which the present invention is based concerns the fact that additional advantages can be obtained through a device in which said collecting vanes of said first and second portion are suited to collect said mud and/or solid bodies during their rotation around said rotation axis inside a first predefined angle of rotation, and to discharge said mud and/or solid bodies respectively towards said first discharging end portion and said hollow tubular body during their rotation around said rotation axis inside a second angle of rotation substantially complementary to said first angle of rotation. Further advantages will be obtained in the case of a further embodiment of the auger according to the present invention, in which said vanes of said first portion define, in combination with the external surface of said hollow tubular body, discharge and/or drain channels along which said mud and/or solid bodies slide towards said first discharging end portion due to gravity. Still further advantages will be obtained by providing an auger in which the vanes of said second portion are shaped in such a way as to define discharge and/or drain channels along which said mud and/or solid bodies slide towards said hollow tubular body of said first portion due to gravity. Other advantages will be obtained by means of an auger in which said hollow tubular body is substantially cylindrical or conical and in which the longitudinal axis of symmetry of said hollow tubular body substantially coincides with said main rotation axis, and/or in which at least one of said vanes of said first portion is fixed to said hollow tubular body at the level of a first longitudinal edge substantially parallel to said main rotation axis, and said at least one vane comprises a free end portion opposite said first longitudinal edge and bent in such a way as to lie at least partially on a truncated cone-shaped surface whose longitudinal axis of symmetry substantially coincides with said main rotation axis. Further advantages will be obtained in the case of an auger in which said at least one vane comprises an end portion adjacent to said first longitudinal edge that defines a flat surface, and/or in which said first portion of said apparatus comprises a plurality of vanes, each one of which is fixed to said hollow tubular body at the height of a first longitudinal edge substantially parallel to said main rotation axis. Other advantages will be offered by an auger in which at least one of said vanes of said second portion comprises a first longitudinal edge substantially coinciding with said main rotation axis, and in which said at least one vane comprises a free end portion opposite said first longitudinal edge and bent in such a way as to lie at least partially on a truncated cone-shaped surface whose longitudinal axis of symmetry substantially coincides with said main rotation axis. Further advantages will also be obtained by providing an auger in which said at least one vane comprises an end portion adjacent to said first longitudinal edge that defines a flat or curved surface, and/or in which said second portion of said apparatus comprises a plurality of vanes fixed to one another at the height of a first longitudinal edge substantially parallel to said main rotation axis.

Further advantages will be obtained by means of a plant as claimed in one of the claims from 12 to 15.

### BRIEF DESCRIPTION OF THE DRAWINGS

The present invention will be illustrated here below through the description of some embodiments of the same represented in the enclosed drawings. It should however be noted that the present invention is not limited to the specific embodiments illustrated in the drawings; on the contrary, all the variants or modifications of the embodiments described herein fall within the scope of the present invention, provided that they are clear, obvious and immediate to the person skilled in the art. In particular, in the attached drawings:
- Figures from 1a to 1d show an apparatus and a plant for the treatment of dirty waters of the type known in the art;
- Figures from 2a to 2d show corresponding perspective, plan and sectional views of a device and an apparatus according to an embodiment of the present invention;
- Figures 3a and 3b respectively show a plan view and a perspective view of a device according to the present invention;
- Figures 4a and 4b show corresponding perspective views that illustrate further details of the device according to the present invention;
- Figures from 5a to 5d show plan, partially sectional and perspective views of parts and/or portions of the device according to the present invention;
- Figures from 6a to 6b show corresponding perspective and/or partially sectional views of a device according to the present invention;
- Figure 7a shows a perspective and partially sectional view of a device according to a further embodiment of the present invention;
- Figures from 8a to 8b show corresponding perspective and partially sectional views of a device according to a further embodiment of the present invention.

### DETAILED DESCRIPTION OF SOME EMBODIMENTS OF THE PRESENT INVENTION

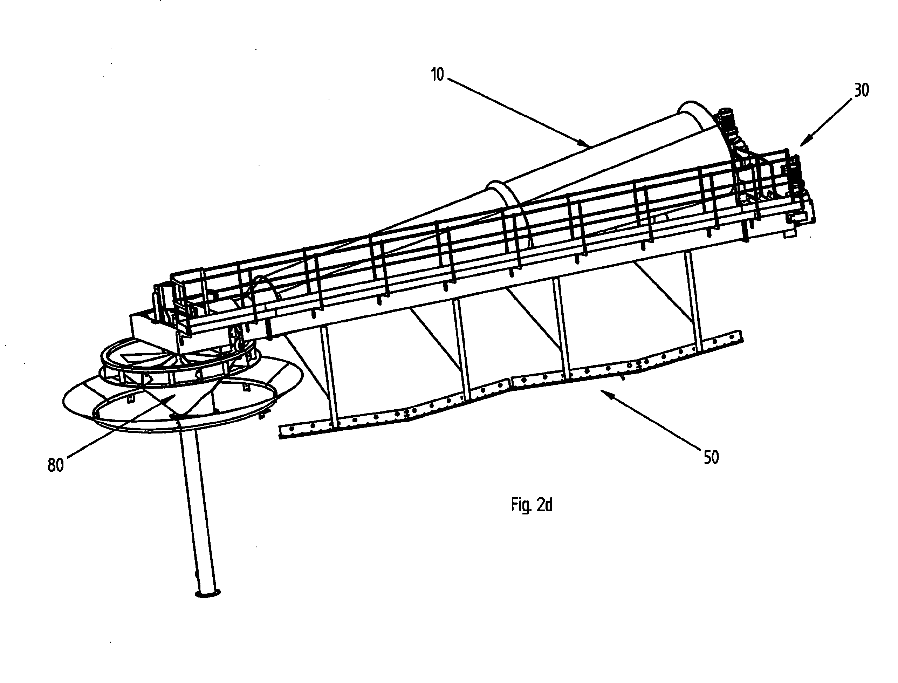

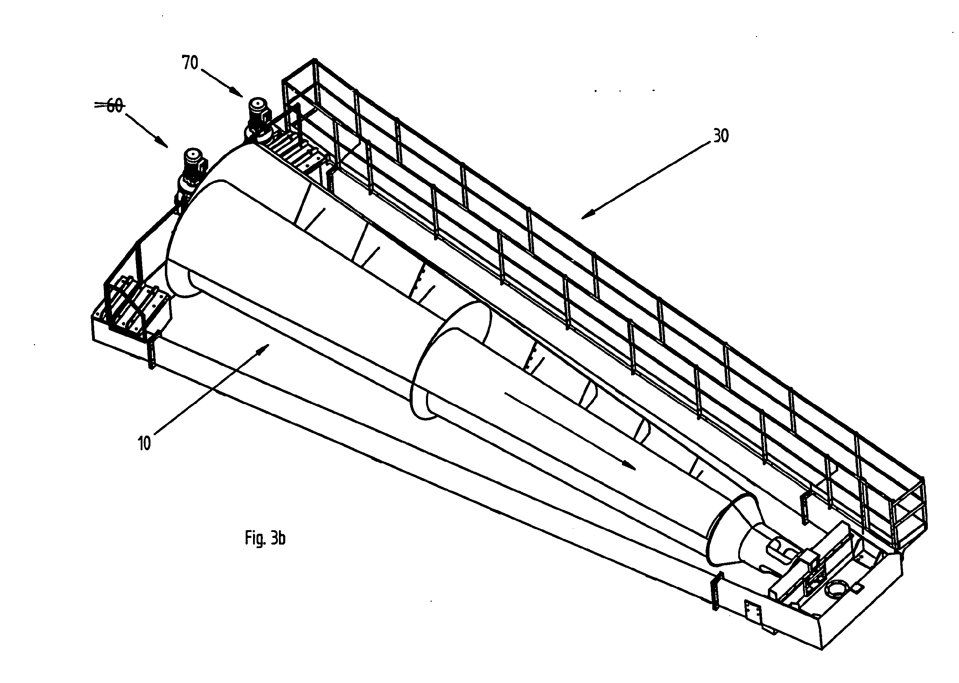

In Figures from 2a to 2d the device or apparatus according to the embodiment of the present invention illustrated therein is identified by the reference number 10. In Figures from 2a to 2c, the device 10 is shown in its usual operating position, and therefore located on a substantially cylindrical tank 20 (with substantially circular and vertical side wall) for collecting dirty waters belonging to a plant 100 for the treatment and/or clarification of said dirty or waste waters. The device 10 thus substantially extends between the vertical wall of the tank 20 and the centre of the same tank and is suited to be rotated around a main rotation axis substantially coinciding with its longitudinal axis of symmetry (and thus as indicated in Figure 2a by the arrow B), as well as around a substantially vertical rotation axis substantially coinciding with the longitudinal axis of symmetry of the collecting tank 20 (and thus in the rotation direction indicated by the arrow A in Figure 2a). For the rotation of the device 10 in the two rotation directions indicated respectively by the arrows A and B in Figure 2a devices that are suitable for this purpose may be provided, like for example electric, hydraulic or similar motors; for example, there may be a motor or device 60 for the rotation of the device 10 around its longitudinal axis of symmetry (in the direction indicated by the arrow B), and a device or motor 70 for the rotation of the device 10 around the vertical axis of symmetry of the cylindrical tank 20 (in the direction indicated by the arrow A). The devices 60 and 70 are shown in detail in Figure 3b. The plant 100 may furthermore be provided with service apparatuses or devices, like for example an inspection bridge 30 arranged substantially parallel to the device 10 and thus in such a way as to connect the centre and the side wall of the tank 20, thus allowing, for example, specialized personnel to carry out repairs, maintenance and/or inspections on the device 10 and/or the tank 20. For example, the bridge 30 can allow the removal from the device 10 of mud or material that may get caught inside the same device 10. An access ladder 40 will furthermore allow access to the inside of the tank 20. Finally, in some cases it will be possible and even advisable to provide the plant 100 with a device 50 (visible in Figure 2d) rigidly fixed to the device 30, capable of scraping the bottom of the tank 20, removing mud, debris or solid bodies that may have deposited on the bottom itself, and conveying them towards a discharge outlet 90.

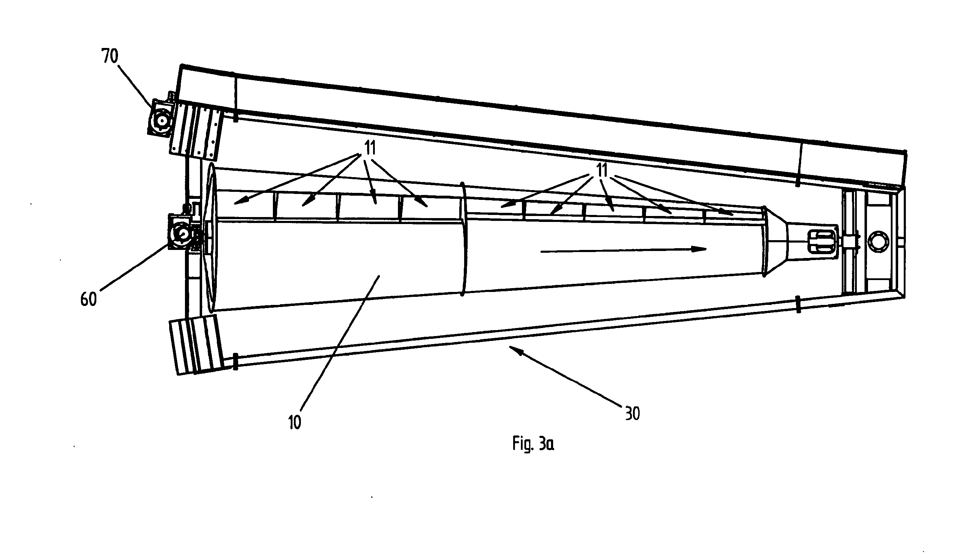

The operation of the device 10 is summed up here below with reference to Figures 3a and 3b; in Figures 3a and 3b the components or characteristic parts of the device 10 previously described with reference to other figures are identified by the same reference numbers.

The rotation of the device 10 in the direction indicated by the arrow A in Figure 2a will allow the device to move on the entire surface of the liquids contained in the tank 20; furthermore, the (simultaneous) rotation of the device 10 in the direction indicated by the arrow B in Figure 2a will allow the blades 11 with which the device 10 is provided (see for this purpose the following description) to be alternately immersed in the liquids contained in the tank 20 and thus to collect the floating mud that thus will be conveyed towards one of the two ends of the device 10 (coinciding with the centre of the tank 20 in the case of the embodiment illustrated in the figures). For this purpose, the vanes 11 will be shaped in such a way as to defme draining or sliding channels for the mud, along which the mud will slide toward said end; in particular, the mud collected by a vane will slide along the channel defmed by the same vane while the vane moves (rotates) outside the liquids and thus during the stage in which the vane is not immersed. The liquids can slide thanks to the action of the force of gravity and to the inclination of the device whose rotation axis, as already explained, will be inclined downwards in the direction of the mud conveying end.

The mud will thus finally slide in the direction indicated by the arrow in Figures 3a and 3b. The mud will then be conveyed into a collection funnel 80 (see Figure 2d) that is substantially concentric with the tank 20.

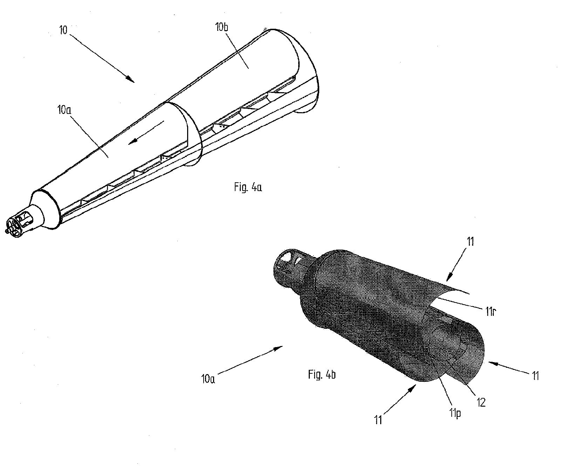

Further characteristics and/or details of the device or auger 10 according to the invention are illustrated in Figures 4a and 4b, in which components or characteristic parts of the same device previously described with reference to other figures are identified by the same reference numbers.

Figure 4a clearly shows that the device 10 represented therein substantially comprises two portions, that is, a first portion 10a adjacent to the mud discharging or conveying end portion of the device 10 (indicated by the arrow in Figure 4a) and a second portion 10p adjacent to said first portion 10a and opposite said mud conveying or collecting end portion of the device 10. Furthermore, Figure 4b shows that the first portion 10a of the device 10 comprises an empty tubular body 12 (cylindrical in Figure 4b, although other shapes are possible, for example with oval or square or even truncated cone-shaped cross section), which thus defines an internal space and from the outer surface of which (opposite said internal space) the collecting vanes 11 extend. Concerning the collecting vanes, it should be noted that their number can vary depending on the needs or circumstances; three collecting vanes, as shown in the example of Figure 4b, in any case guarantee proper operation of the device. The longitudinal axis of symmetry of the hollow body 12 substantially coincides with the rotation axis of the device 10 in the direction of rotation indicated by the arrow B in Figure 2a. Each one of the collecting vanes 11 comprises a longitudinal edge substantially parallel to the longitudinal axis of symmetry of the hollow body 12, at the level of which each vane 11 is fixed to the same hollow body 12. Each vane 11 also comprises a flat (or curved) portion 11p that extends from said edge fixed to said hollow body 12. Each vane 11 also comprises a second, substantially collecting portion 11r that extends from said flat or curved portion in such a way that the vane 11 has a cross section whose shape resembles a T (according to a plane lying crosswise to the longitudinal axis of symmetry of the hollow body 12). Said second collecting portion 11r comprises a second longitudinal edge opposite the edge of connection to the hollow body 12, which limits the free end of the collecting portion 11r. In particular, the free end of the collecting portion 11r is rounded or in other words twisted. Finally, the distance of the edge of the vane that defines its free collecting end portion 11r from the longitudinal axis of symmetry of the hollow tubular body 12 varies along the hollow tubular body 12 and decreases in proximity to the mud conveying end portion of the device 10 and increases away from said mud conveying end portion of the device 10. This means that the free end of the collecting portion 11r, rounded and/or twisted as described above, will lie on an imaginary truncated cone-shaped surface whose longitudinal axis of symmetry coincides with the longitudinal axis of symmetry of the hollow body 12 and thus with the rotation axis of the device 10 in the rotation direction indicated by the arrow B in Figure 2a. It can be observed that each vane 11 defines, in combination with a portion of the external surface of the hollow body 12, a drain channel in which the mud collected by the vane during its rotation in the direction indicated by the arrow B in Figure 2a will be trapped, successively sliding towards the mud collecting and conveying end portion of the device 10 (thanks to the action of the mud weight or the force of gravity and the inclination of the device 10 downwards in the direction of its mud collecting end portion). It should therefore be noticed that the mud collected by the vanes of the first portion 10a of the auger 10 according to the present invention will slide towards the mud collecting end portion of the device outside the hollow body 12.

Figures from 5a to 5c (in which components and/or characteristic parts previously described with reference to other figures are identified by the same reference numbers ) illustrate further characteristics of the device or auger 10 according to the present invention.

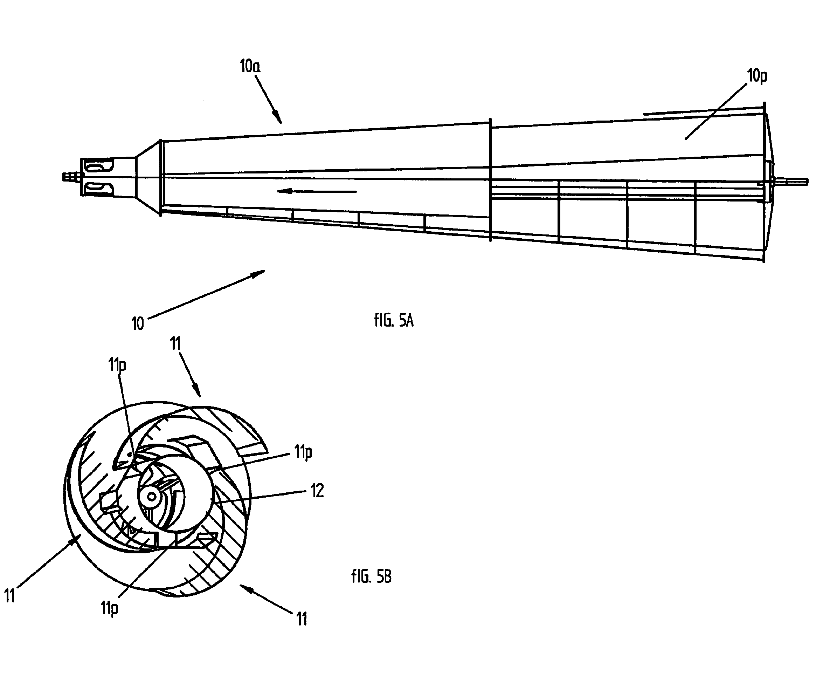

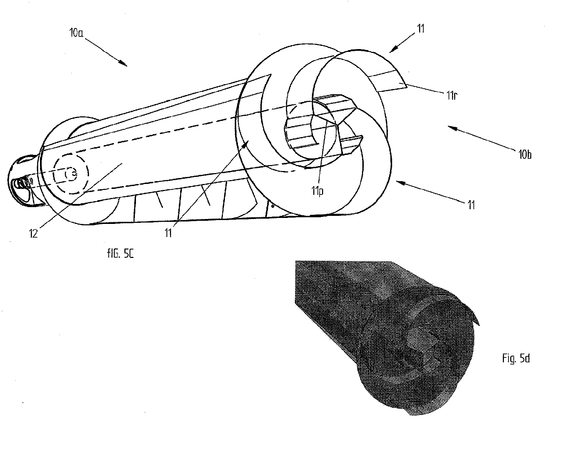

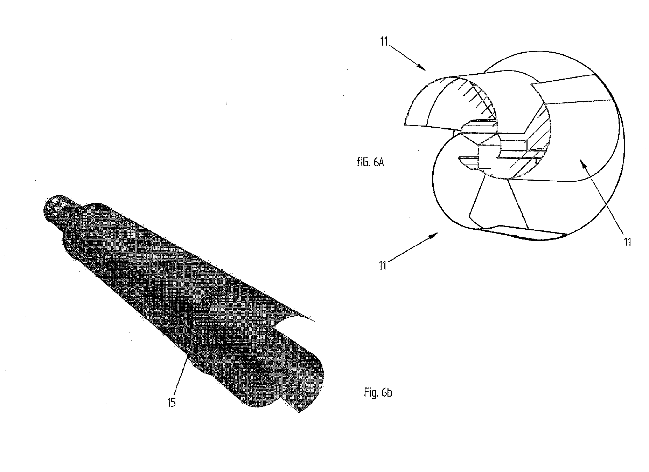

Figure 5a shows a plan and partially sectional view of the device 10; furthermore, Figure 5a shows a first plane B-B, a second plane G-G and a third plane A-A, each one of which lies crosswise to the longitudinal rotation axis of the device 10 and according to which the cross sections shown respectively in Figures 5b, 5c and 6a extend (in a partially perspective view). Both the cross section planes G-G and A-A are located in the second portion 10p of the device 10 adjacent to the first portion 10a and opposite the mud collecting and conveying end portion of the device 10 (indicated by the arrow in Figure 5a), while the plane B-B is located in the first portion 10a of the device 10 adjacent to its mud conveying end portion. Figure 5b confirms in particular that the hollow body 12 and the vanes 11 that extend from the external surface of the same extend for a given section (or for a section having predefmed depth) substantially corresponding to the length of the first portion 10a. On the contrary, Figure 5c shows, instead, the shape and mutual arrangement of the vanes 11 in the portion 10p of the device 10. In this portion, in fact, the previously described hollow body 12 is not provided. On the contrary, the vanes 11 extend from a connecting portion that is common to all the vanes. Concerning the collecting vanes 11, in particular, it should be noted that also in this case their number can vary depending on the needs and/or circumstances; three collecting vanes, as shown in the example of Figure 4b, in any case guarantee proper operation of the device. The connecting portion that the vanes have in common substantially coincides with the longitudinal axis of symmetry of the device 10 and thus with the rotation axis of the device 10 in the direction of rotation indicated by the arrow B in Figure 2a. Each one of the collecting vanes 11 comprises a longitudinal edge substantially parallel to the longitudinal axis of symmetry of the device 10, at the level of which the vanes are fixed to one another. Each vane 11 of the portion 10p also comprises, as in the case of the vanes of the portion 10a, a flat portion 11p that extends from said common connection edge and lies on a plane that passes through the longitudinal axis of symmetry of the device 10. Each vane 11 also comprises a second portion 11r, substantially suited to collect the mud and extending from said flat portion in such a way that the vane 11 has a cross section whose shape resembles a T (according to a plane lying crosswise to the longitudinal axis of symmetry of the device 10). Said second collecting portion 11r comprises a second longitudinal body opposite the centre connection edge and shared by the vanes 11, which limits the free end of the collecting portion 11r. In particular, the free end of the collecting portion 11r is rounded or in other words twisted. Finally, the distance of the vane edge that defines its free collecting end portion 11r from the longitudinal axis of symmetry of the device 10 (from the common connecting edge) varies along the longitudinal axis of symmetry of the device 10, and is shorter in proximity to the portion 10a and longer away from said first portion 10a of said device. This means that, also in the case of the collecting vanes of the second portion 10p of the device 10, the free end of the collecting portion 11r, rounded and/or twisted as previously described, will lie on an imaginary truncated cone-shaped surface whose longitudinal axis of symmetry coincides with the longitudinal axis of symmetry of the device and thus with the rotation axis of the device 10 in the direction of rotation indicated by the arrow B in Figure 2a and with the common connection edge. It can thus be observed that each vane 11 defines , autonomously or in combination with an adjacent vane, a drain channel in which the mud collected by the vane during its rotation in the direction indicated by the arrow B in Figure 2a will be trapped, successively sliding towards the first portion 10a of the device and thus in the direction of the mud collecting and conveying end portion of the device 10 (also in this case thanks to the action of the mud weight or the force of gravity and the inclination of the device 10 downwards in the direction of its mud collecting end portion). It should then be noticed that the mud collected by the vanes of the second portion 10p of the device or auger 10 according to the present invention will slide towards the first portion 10a of the same and will be introduced in the inner space defined by the hollow body 12 and then conveyed from here to the mud collecting end portion 10-11 of the device within the hollow body 12.

From Figures 6a and 6b (partially perspective sectional views according to plane A-A of Figure 5a), it is possible to observe also that the two portions 10a and 10p of the device or auger 10 according to the present invention are separated by a transverse partition wall 15 that extends radially from the external surface of the hollow body 12 and lies on a plane that is substantially perpendicular to the longitudinal axis of symmetry and/or rotation axis of the device 10. The presence of the partition wall 15 makes it possible to optimize the conveyance of mud from the vanes 11 of the second portion 10p to the inside of the hollow body 12 of the first portion 10a of the device 10.

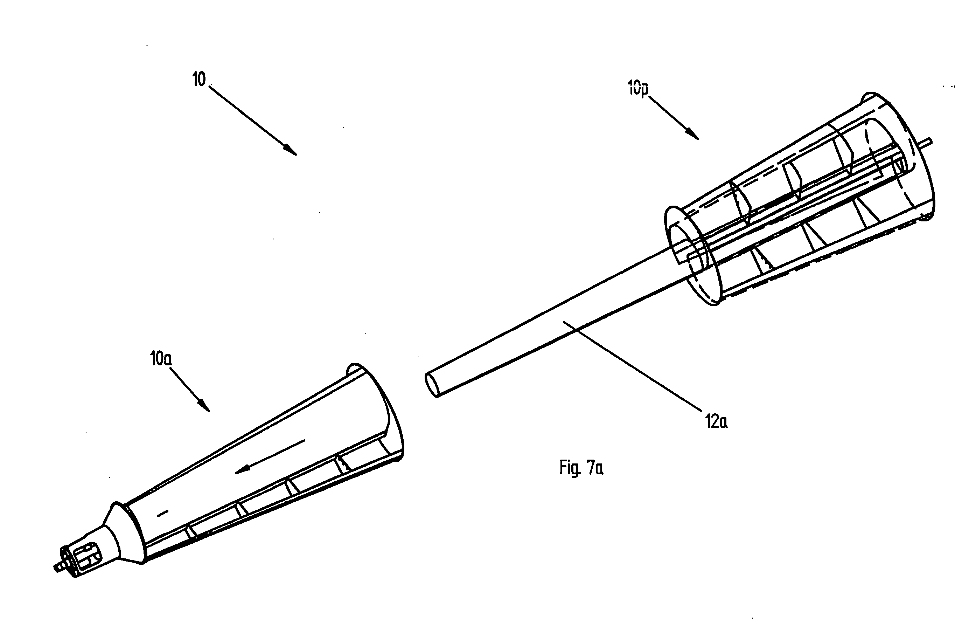

The embodiment shown in Figure 7a differs from the embodiments described above due to the fact that in this case the hollow body 12a is integral with and belongs to the second portion 10p. This construction variant offers considerable advantages for the assembly of the auger 10. In fact, in this case the portion 10a will be conceived in such a way as to allow the hollow body 12a to be housed inside the first portion 10a. For example, the first portion 10a may also be provided with an empty body 12 (not shown in Figure 7a) as in the case of the embodiments previously described, from which the vanes 11 of said first portion will extend. In this case, said hollow bodies 12a and 12, respectively of said second and said first portion 10p and 10a will have such dimensions as to allow the hollow body 12a of the second portion 10p to be housed in the hollow body 12 when the assembly of the auger has been completed and the auger is ready for operation. Alternatively, the first portion 10a may not be provided with an empty body of its own and the vanes of said first portion 10a may extend from a structure or frame that will define an inner space in which the hollow body 12a of the second portion will be housed. In this case, the hollow body 12a will have such a length as to allow the mud collected by the vanes of the second portion 10p of the auger to be conveyed directly to the end of the auger opposite the second portion 10p. This embodiment offers further advantages also in terms of mud discharge and/or conveyance. In fact, it will be possible to prevent any loss of mud in the area where the mud passes from the vanes of the second portion to the hollow body.

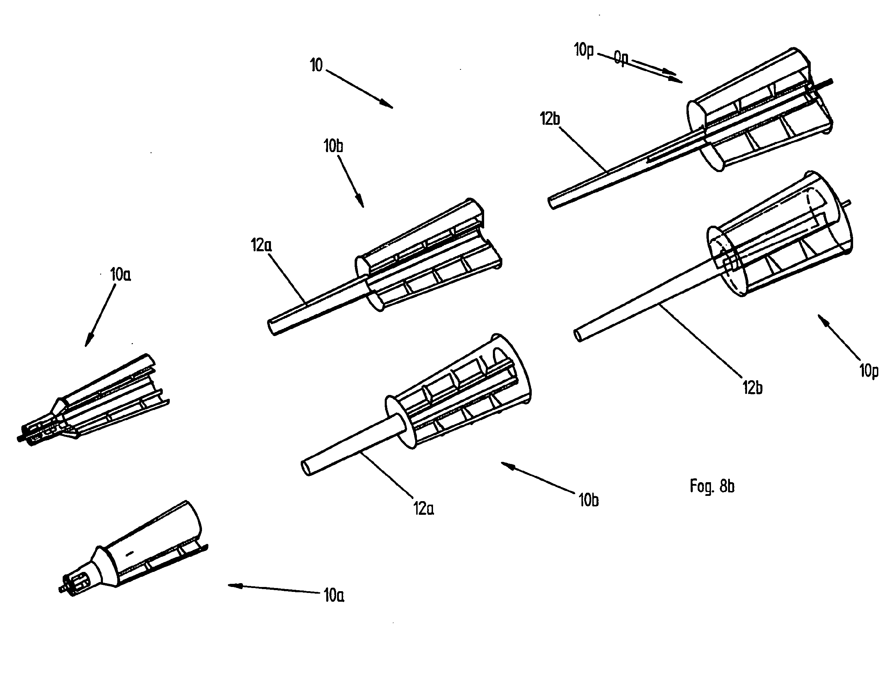

The further embodiment shown in Figures 8a and 8b clearly shows that the number of portions making up the auger according to the present invention, as well as their length, may vary according to the needs and/or circumstances. In particular, while the embodiment illustrated comprises three portions 10a, 10b and 10p in total, embodiments with four or five or more portions will also be possible.

The portions shown are similar to those described above and thus comprise a peripheral portion 10p whose vanes will discharge the mud into a first hollow body 12b (belonging to the same portion 10p or to the adjacent portion 10b), an intermediate portion 10b whose vanes will extend either from an empty body or from a structure suited to house the hollow body 12b) and will discharge the mud into an empty body 12a (belonging to the same intermediate portion 10b or to the end portion 10a) and, in fact, an end portion 10a whose vanes will extend either from an empty body or from a structure suited to house the hollow body 12a of the intermediate portion 10b. Also the length of the hollow bodies may vary according to the needs and/or circumstances; for example, the hollow bodies 12a and 12b may extend up to the collecting end portion of the auger or their length may be such that the mud is conveyed from the hollow body 12b into the hollow body 12a.

It should also be observed that in other embodiments the vanes of each portion may be offset with respect to the adjacent portions in order to obtain a more continuous flow.

It has thus been shown, by means of the previous description of the embodiments of the present invention shown in the drawings, that the present invention (in particular the device or auger 10 according to the present invention) achieves the set objects. In particular, the present invention allows the mud to be disposed of and to be conveyed along the device with no need to increase the size of the vanes (the distance between their free edge and the rotation axis of the device) excessively, with no need to reduce the rotation speed of the device and with no need to increase the downward inclination of the mud collecting end portion of the device excessively. This is possible in particular owing to the inventive concept on which the present invention is based, according to which the device comprises at least two portions or parts, one of which is provided with an empty body inside which the mud collected by the vanes of the other portion of the device are conveyed. In this way, the mud collected by the vanes of this portion of the device will have to cover a distance that is shorter than the distance between their point of collection and the point of collection in the tank along the channels, while part of their way will be inside the hollow body of the other portion of the device. In this way it will be possible to avoid the risk that the collected mud may be rejected into the tank during the rotation of the vanes around the main rotation axis of the device itself.

Even if the description provided above relates to the embodiments of the present invention shown in the enclosed drawings, the present invention is not limited to the embodiments described above and shown in the enclosed drawings. On the contrary, all the variants and/or modifications that are clearly understandable and intuitive for the person skilled in the art fall within the scope of the present invention. For example, the number of vanes of one or both of the portions of the device can vary depending on the needs and/or circumstances. In the same way, the shape and size of the vanes can vary, too, as well as the length of the two portions that make up the device according to the present invention. The object of the present invention is thus defined by the claims.

## Claims

1. Apparatus or device (10) for collecting mud and/or solid components (1) from dirty waters like waste waters produced by civil and/or industrial premises, said apparatus comprising collecting vanes (11) suited to be rotated around a common main rotation axis, said collecting vanes being suited to collect said mud or solid elements during their rotation around said common main rotation axis and to discharge said mud towards a first end portion (10-11) of the apparatus due to gravity, said apparatus being **characterized in that** said apparatus comprises a first portion (10a) adjacent to said first discharging end portion (10-11) wherein said vanes are suited to convey the collected mud towards said end portion of the apparatus, **in that** said apparatus comprises an empty tubular body (12), and **in that** said apparatus comprises a second portion (10p) adjacent to said first portion and opposite said first discharging end portion, wherein the mud collected by the vanes of said second portion are conveyed into said empty tubular body (12) and are discharged inside said empty tubular body (12) towards said first end portion.

2. Apparatus as claimed in claim 1, **characterized in that** the vanes of said first portion extend from said empty tubular body (12).

3. Apparatus as claimed in one of claims 1 and 2, **characterized in that** said collecting vanes (11) of said first and second portion are suited to collect said inud and/or solid components during their rotation around said axis of rotation inside a first predefined angle of rotation, and to discharge said mud and/or solid components respectively towards said first discharging end portion and said empty tubular body during their rotation around said axis of rotation inside a second angle of rotation substantially complementary to said first angle of rotation.

4. Apparatus as claimed in one of claims 1 to 3, **characterized in that** said vans (11) of said first portion define, in combination with the external surface of said empty tubular body (12), discharge and/or drain channels along which said mud and/or solid components slide towards said first discharging end portion due to gravity.

5. Apparatus as claimed in one of claims 1 to 4, **characterized in that** the vanes (11) of said second portion are shaped so as to defme discharge and/or drain channels along which said mud and/or solid components slide towards said empty tubular body due to gravity.

6. Apparatus as claimed in one of claims 1 to 4, **characterized in that** said empty tubular body (12) is substantially cylindrical or cone-shaped and **in that** the longitudinal axis of symmetry of said empty tubular body substantially coincides with said main axis of rotation.

7. Apparatus as claimed in one of claims 1 to 6, **characterized in that** at least one of said vanes (11) of said first portion is fixed to said empty tubular body (12) at the level of a first longitudinal edge substantially parallel to said main axis of rotation, and **in that** said at least one vane comprises a free end portion (11r) opposite said first longitudinal edge and bent so as to lie at least partially on a trucanted cone-shaped surface the longitudinal axis of symmetry of which substantially coincides with said main axis of rotation.

8. Apparatus as claimed in claim 7, **characterized in that** said at least one vane (11) comprises an end portion (11p) adjacent to said first longitudinal edge which defines a flat surface.

9. Apparatus as claimed in one of claims 1 to 8, **characterized in that** said first portion of said apparatus comprises a plurality of vanes (11), each of which is fixed to said empty tubular body (12) at the level of a first longitudinal edge substantially parallel to said main axis of rotation.

10. Apparatus as claimed in one of claims 1 to 9, **characterized in that** at least one of said vanes (11) of said second portion comprises a first longitudinal edge which substantially coincides with said main axis of rotation, and **in that** said at least one vane comprises a free end portion (11r) opposite said first longitudinal edge and bent so as to lie at least partially on a truncated cone-shaped surface the longitudinal axis of symmetry of which substantially coincides with said main axis of rotation.

11. Apparatus as claimed in claim 10, **characterized in that** said at least one vane comprises an end portion (11p) adjacent to said first longitudinal edge which defines a flat surface on which said main axis of rotation lies.

12. Apparatus as claimed in one of claims 1 to 11, **characterized in that** said second portion of said apparatus comprises a plurality of vanes (11) fixed to one another at the level of a first longitudinal edge substantially parallel to said main axis of rotation.

13. Plant or equipment (100) for treating dirty waters such as the waste waters produced by civil and/or industrial premises, said plant comprising a collecting and/or containing tank (20) suited to contain said waste waters, **characterized in that** said plant comprises an apparatus (10) as claimed in one of claims 1 to 12, and **in that** said apparatus is located with respect to said collecting tank in such a way that said collecting vanes (11) of said apparatus are at least partially immersed into said waste waters during their rotation around said main axis of rotation.

14. Plant as claimed in claim 13, **characterized in that** said apparatus (10) is positioned on said collecting tank (20) at the level of an upper aperture of said tank so that said main axis of rotation passes through the central point of the tank and is inclined with respect to the horizon.

15. Plant as claimed in one of claims 13 and 14, **characterized in that** said collecting tank (20) comprises a substantially cylindrical external wall which extends from bottom to top, and **in that** said first discharging end portion of said apparatus substantially coincides with the centre of said tank.

16. Plant as claimed in claim 15, **characterized in that** said apparatus (10) is suited to be rotated around a second axis of rotation substantially coinciding with the main axis of said substantially cylindrical tank.
